# FASCICULE DE BREVET EUROPEEN

(11) **EP 2 766 176 B1**
(45) Date de publication et mention de la délivrance du brevet: **20.01.2016**
(21) Numéro de dépôt: 12770144.9
(22) Date de dépôt: 11.10.2012
(51) Int. Cl.: B29C 70/46, B29C 70/50, B29D 99/00

(54) **PROCÉDÉ DE RÉALISATION D'UN PANNEAU RAIDI EXTRUDÉ ET DISPOSITIF DE MISE EN OEUVRE**
VERFAHREN ZUR HERSTELLUNG EINER EXTRUDIERTEN VERSTEIFTEN PLATTE UND VORRICHTUNG ZUR DURCHFÜHRUNG DES VERFAHRENS
METHOD FOR PRODUCING AN EXTRUDED STIFFENED PANEL, AND DEVICE FOR IMPLEMENTING SAME

(30) Priorité: 11.10.2011 FR 1159179
(43) Date de publication de la demande: 20.08.2014
(73) Titulaire: Airbus Operations S.A.S., 31060 Toulouse (FR)
(72) Inventeur: BLOT, Philippe, F-44000 Nantes (FR); KNEVELER, Matthieu, F-44840 Les Sorinieres (FR)
(74) Mandataire: Gicquel, Olivier Yves Gérard
(86) Numéro de dépôt international: PCT/EP2012/070168
(87) Numéro de publication internationale: WO 2013/053831

(56) Documents cités:
- EP-A1- 2 119 544
- WO-A1-2008/019894
- WO-A1-2008/116560
- WO-A2-2008/105636
- US-A- 3 490 973
- US-A1- 2007 175 571

## Description

La présente invention appartient au domaine de la fabrication des structures.

Plus particulièrement l'invention concerne la réalisation de panneaux de faible épaisseur et raidis en matériau composite.

Dans le domaine des structures, et plus particulièrement des structures aéronautiques, il est apprécié d'utiliser des structures résistantes et aussi légères que possibles.

En particulier les structures telles que les fuselages d'avion, ou les structures coques en général, sont constituées entre autre de panneaux dans lesquels une peau relativement de faible épaisseur par rapport aux autres dimensions du panneau est stabilisée par des raidisseurs (également désignées lisses) fixés à la peau qui augmente la résistance de la peau et surtout qui en augmente la rigidité et lui confère une tenue acceptable au flambage.

De tels panneaux raidis peuvent être réalisés en matériaux métalliques ou comme l'usage en est de plus en plus généralisé, en particulier dans le domaine aéronautique, en matériaux composites.

Le type de matériaux composites utilisé pour ces applications consiste généralement en un empilage de plis comportant des fibres, souvent des fibres longues, maintenues dans une matrice organique dure.

Les fibres sont orientées suivant des directions pouvant être différentes suivant le pli considéré afin de conférer à chaque pièce en matériau composite des propriétés mécaniques adaptées aux sens des efforts introduits dans la pièce.

Les pièces en matériau composite sont mises en forme, pour obtenir la géométrie que ces pièces doivent avoir dans l'application prévue, au cours d'une étape pendant laquelle la matrice organique, en général une résine organique polymère, n'est pas dure, soit que la résine est une résine durcissant lors d'un processus ultérieur de cuisson, résines dites thermodurcissables, soit que la résine est une résine dans un état plastique lorsque la température est portée à une valeur suffisante, résines dites thermoplastiques.

Pour réaliser un panneau raidi en matériau composite, en particulier en matériau composite thermodurcissable, il est nécessaire que des raidisseurs soient solidarisés à la peau du panneau de manière résistante et il existe pour cela plusieurs techniques qui sont aujourd'hui mises en oeuvre.

Une première technique consiste à réaliser indépendamment la peau et chacun des raidisseurs en matériau composite et à assembler les raidisseurs à la peau dans un état durci. L'assemblage est alors réalisé par des moyens également utilisés avec les matériaux métalliques tels que le collage ou le rivetage.

Un inconvénient de cette première technique tient au fait qu'elle est longue à mettre en oeuvre et que chacun des éléments à assembler doit être réalisé avec une précision suffisante pour garantir que l'assemblage sera correct. En pratique pour atteindre la précision nécessaire celle-ci exige la mise en oeuvre de moules qui sont à la fois coûteux et spécifiques de chaque pièce à réaliser.

Une deuxième technique connue consiste à réaliser les raidisseurs en matériau composite dans une première étape puis dans une seconde étape de réaliser la peau en matériau composite directement sur les raidisseurs prépositionnés, et enfin dans une troisième étape de procéder au durcissement de la peau en même temps que celle-ci adhère avec les raidisseurs.

Cette technique permet de garantir que la peau se trouvera appliquée très précisément sur les raidisseurs, mais elle exige que les raidisseurs soient parfaitement maintenus en position dans un moule pendant la réalisation de la peau et il est difficile dans ce cas d'obtenir la précision et l'état de surface attendus des panneaux finis.

Dans une variante de cette technique, la peau est réalisée en premier et les raidisseurs sont réalisés sur la peau dans une seconde étape, mais si dans ce cas il est généralement plus facile d'obtenir l'état de surface recherché sur une face du panneau opposée à celle sur laquelle sont fixés les raidisseurs, il est plus difficile en revanche d'obtenir une précision satisfaisante dans le positionnement des raidisseurs.

Cette deuxième technique et sa variante nécessitent en outre l'interposition d'un film de colle à l'interface peau/raidisseurs et donc une étape supplémentaire dans la réalisation des panneaux.

Une troisième technique consiste à mouler simultanément la peau et les raidisseurs dans un état non durci et à réaliser le durcissement simultané de la peau et des raidisseurs au cours d'une étape de cuisson pendant laquelle les raidisseurs sont assemblés à la peau lors d'une phase de polymérisation de la résine.

Cette technique, dite de cocuisson (cocurring en anglais), permet un assemblage très performant des raidisseurs et de la peau mais s'avère exigeant en terme de moules qui doivent être de dimensions similaires au panneau à réaliser et il s'avère difficile de maîtriser les dimensions de la pièce lorsque les tolérances à respecter sont serrées.

Les documents US 2007/0175571 et EP 2 119 544 présentent de telles techniques de cocuisson permettant l'assemblage d'une peau et d'un raidisseur qui sont durcis simultanément. Cependant, les techniques décrites par ces documents ne permettent pas d'obtenir des raidisseurs creux.

Le procédé de l'invention propose une méthode qui permet de palier aux principaux défauts des techniques existantes pour la réalisation de pièces en matériaux composites thermodurcissables ; Ces matériaux matériaux composites, à l'état fini, comportent des plis de fibres qui sont maintenues dans une résine durcie, le plus souvent une résine organique polymérisée.

Les pièces réalisées par le procédé selon l'invention sont par exemple des panneaux raidis.

Une pièce réalisée selon le procédé de la présente invention comporte deux sous-ensembles : une peau et au moins un raidisseur, en général plusieurs raidisseurs. La peau et le au moins un raidisseur sont solidaires, l'un de l'autre. Selon l'invention, chaque sous-ensemble est formé à partir d'au moins une bande.

Ainsi la peau est formée à partir d'au moins une première bande et chaque raidisseur est formé à partir d'au moins une seconde bande. Lorsque la peau, ou le raidisseur est formé de plusieurs bandes, celles-ci sont alors superposées.

Les dimensions des premières et secondes bandes sont adaptées aux dimensions de la peau et des raidisseurs et sont généralement différentes et prévues de sorte que plusieurs raidisseurs peuvent être assemblés sur la peau.

Chacune des première ou seconde bandes est formée d'au moins un pli de fibres imprégnées de résine, la résine étant alors non durcie ; c'est-à-dire non polymérisée.

Le procédé de l'invention de réalisation d'une pièce en matériau composite, pièce comportant au moins deux sous-ensembles, à savoir une peau et au moins un raidisseur, en général plusieurs raidisseurs, qui sont assemblés dans la pièce réalisée, comporte :
- une étape de réalisation d'une préforme de la pièce par une traction, suivant une direction longitudinale X, des premières et secondes bandes, chaque bande étant formée d'au moins un plis, le plus souvent d'un empilement de plis, de fibres imprégnées de la résine dans un état non durcie, au travers d'une filière de conformation et de positionnement des bandes, au moins une première bande étant mise en contact avec au moins une seconde bande, et en outre un noyau de polymérisation étant introduit entre une première bande et une seconde bande en contact avant leur passage dans la filière et, dans une étape ultérieure lorsque la préforme est sortie de la filière, ;
- une étape de pressage de la préforme obtenue dans une presse chauffante pendant une durée dt de sorte à former la peau et le au moins un raidisseur assemblé à la peau, une pression **P** et d'une température **T** de polymérisation de la résine des premières et secondes bandes étant appliquée à la préforme dans la presse chauffante sur une longueur de presse **L** de la préforme, cette longueur de presse **L** étant considérée dans le sens de la direction longitudinale X et étant inférieure, de préférence petite, par rapport à une longueur du panneau réalisé, lorsque ladite préforme est sortie de la filière sous l'effet de la traction.

Ainsi, lorsque les bandes passent dans les filières, elles sont mises en forme suivant la géométrie des filières qui est en accord avec la géométrie de la pièce et de ses sous-ensembles, d'une part la peau et d'autre part le ou les raidisseurs, et les sous ensembles ainsi mis en forme sont positionnés précisément les uns par rapport aux autres avec leurs surfaces devant être assemblées en contact. Enfin au fur et à mesure de leur sortie de la filière les bandes formant la pièce sont compactées et durcis par polymérisation.

En outre le noyau est introduit en continu lors de la formation de la préforme.

Pour réaliser une pièce de grande longueur, la pression **P** de l'étape de durcissement est réalisée de manière cyclique lorsqu'une longueur prédéfinie **dL** de préforme est sortie de la filière sous l'effet de la traction. La durée d'un cycle correspond donc à la durée nécessaire pour qu'une longueur **dL,** inférieure à la longueur de presse **L,** de préforme sorte de la filière et de pièce sorte de la presse à l'état polymérisé souhaité. Il est ainsi possible, au moins en théorie de réaliser une pièce, dont la section correspond à la section de la filière, de longueur infinie, en pratique limitée par la longueur des bandes utilisées pour réaliser la pièce.

Pour assurer un durcissement souhaité de la résine l'étape de durcissement est appliquée, lors d'un cycle, pendant une durée **dt** déterminée de sorte qu'un point donné de la préforme a été soumis à la pression **P** et à la température **T** pendant un temps cumulé nécessaire à l'obtention d'un niveau de polymérisation souhaité de la résine thermodurcissable lorsque ledit point a parcouru, depuis sa sortie de la filière, une distance correspondant à la longueur de presse **L**. Le durcissement souhaité peut correspondre à une polymérisation finale de la pièce ou bien une polymérisation partielle de la résine si par exemple des étapes ultérieures de formage sont prévues. La polymérisation est ainsi progressive sur la longueur de presse **L** pour un point donné de la préforme qui passe de l'état non polymérisé au premier cycle pour lequel ce point est soumis à la pression **P** et à la température **T** à l'état de polymérisation voulu au dernier cycle l'ayant conduit à parcourir la longueur de presse **L**.

Suivant une méthode, pour déplacer la préforme la pression **P** est interrompue à la fin d'un cycle de l'étape de polymérisation lorsque la préforme est déplacée d'une longueur **dL** sous l'effet de la traction et la préforme est immobilisée pendant l'application de la pression **P**.

Suivant une autre méthode, la pression **P** est appliquée pendant le déplacement de la préforme, qui est dans ce cas suivie, voire entraînée, par le dispositif qui réalise l'application de la pression **P** et de la température **T**, sous l'effet de la traction et est interrompue à la fin d'un cycle de l'étape de polymérisation lorsque la préforme a été déplacée de la longueur **dL** pour réaliser le cycle suivant.

Dans tous les cas, on comprend que le déplacement de la préforme d'une longueur **dL** est associé avec en aval, suivant le sens de la traction, la production d'une longueur supplémentaire égale de pièce et en amont le passage de la même longueur de bandes dans la filière et la réalisation de la même longueur de préforme à la sortie de la filière.

Pour garantir que la pièce a atteint en tout point le niveau de polymérisation souhaité, la longueur **dL** est strictement inférieure à la longueur de presse **L,** et de préférence, pour permettre un processus de fabrication sensiblement en continu et une polymérisation homogène dans le sens de la longueur de la pièce , égale ou inférieure à 1/3 de la longueur de presse **L**.

Dans une forme de mise en oeuvre, le noyau de polymérisation est un noyau gonflable, se présentant par exemple sous la forme d'une vessie qui peut être introduite non gonflée, dans une forme aplatie, à l'entrée de la filière où elles se comporte comme une bande.

Le noyau de polymérisation est avantageusement gonflé après son passage dans la filière à une pression **Pa** supérieure à la pression atmosphérique supposée régner dans l'atelier où est mis en oeuvre le procédé.

Avantageusement la pression intérieure du noyau de polymérisation gonflable est maintenue à un niveau significativement supérieur à la pression ambiante atmosphérique que lorsque la pression **P** de la presse chauffante est appliquée de sorte à éviter que les bandes soient séparées ou déformées par le noyau de polymérisation gonflable.

Afin de limiter les risques de déchirement des bandes lors de la traction sur la préforme, en particulier quand les bandes sont dans la filière, chaque bande comporte au moins un pli comportant des fibres longues orientées suivant la direction longitudinale X correspondant à la direction de la traction lorsque la bande est incorporée dans la préforme. Ainsi si une bande ne comporte qu'un seul pli, ce pli comporte des fibres longues orientées suivant la longueur de la bande et si une bande est formée d'un empilement de plis, alors au moins un de ces plis comporte des fibres orientées suivant la longueur de la bande.

Lorsque des renforts doivent être réalisés localement sur la pièce, avantageusement, avant la réalisation de la préforme, en amont de la filière, un ou plusieurs plis ou bandes de renfort sont déposés localement sur au moins une des bandes lors d'une étape préalable, de sorte que les renforts locaux sont intégrés dans le procédé de fabrication et sont cocuits avec la pièce sans qu'il soit nécessaire de réaliser les renforts locaux dans une étape ultérieure.

Pour assurer un compactage du matériau composite des raidisseurs lors de l'étape de durcissement une compression latérale de l'âme des raidisseurs est avantageusement réalisée.

Dans un mode de mise en oeuvre du procédé, les paramètres agissant sur la polymérisation de la résine thermodurcissable, notamment la température **T**, la longueur de presse **L**, la longueur **dL** de déplacement lors d'un cycle et la durée **dt** d'un cycle, sont déterminés pour obtenir après l'étape de polymérisation une pièce à l'état dit mi-cuit dans lequel la résine est partiellement polymérisée de sorte à permettre un formage à chaud ultérieur de la pièce et ou un assemblage avec d'autre pièces par cocuisson au cours d'une étape de polymérisation finale.

L'invention concerne également un dispositif pour la réalisation de pièces en matériau composite selon le procédé de l'invention, dispositif qui comporte une filière de mise en forme et de positionnement de premières et secondes bandes, bandes formées de plis de fibres imprégnées d'une résine non durcie, introduites en amont de la filière pour produire une préforme en aval de la filière, suivant une direction X de déplacement de la pièce à réaliser, et qui comporte une presse chauffante pour appliquer une pression **P** de compactage des plis de la préforme et pour appliquer une température **T** pour chauffer la préforme à une température de polymérisation de la résine.

En outre dans le dispositif de l'invention, la presse chauffante est placée en aval de la filière et un dispositif de traction agit sur la pièce formée et ou sur la préforme pour déplacer les bandes dans la filière suivant un sens amont vers aval.

Le dispositif comporte également un dispositif de distribution d'au moins un noyau de polymérisation, configuré pour distribuer chaque noyau de polymérisation entre une première bande et une seconde bande en amont de la filière.

Dans une forme de réalisation pour mettre en oeuvre le procédé dans le cas ou des noyaux de polymérisation gonflables sont utilisés, le dispositif comporte un système de gonflage de la ou des vessies gonflables des noyaux de polymérisation, système de gonflage qui est de préférence asservi à la presse chauffante de sorte que la ou les vessies gonflables ne sont gonflées que si la pression **P** est exercée sur la préforme par la presse chauffante.

La presse chauffante applique la pression **P** de manière cyclique de manière coordonnée avec le déplacement de la préforme sous l'action du dispositif de traction de sorte à permettre le déplacement de la pièce et à assurer la polymérisation progressive de la résine.

Pour assurer la mise en forme des différents sous-ensembles, la filière comporte des filières secondaires, une filière secondaire correspondant à un sous-ensemble, peau ou raidisseur, de la pièce à réaliser par le dispositif.

La filière comporte le cas échéant un profil pour former un soyage sur un bord du panneau ou sur chaque bord du panneau, soyage(s) permettant de réaliser des assemblages affleurant de panneaux.

Avantageusement pour disposer de bandes de grandes longueurs et pour pouvoir produire la pièce en continu sur également des longueurs importantes, la pièce produite étant le cas échéant débité après son passage dans la presse chauffante en panneaux de longueurs plus petites, les bandes sont préparées en bobines et le dispositif comporte un râtelier pour recevoir les bobines de bandes en amont de la filière.

Lorsque des raidisseurs nécessitent l'usage d'un noyau de polymérisation, le dispositif est pourvu d'un dispositif de distribution de vessies souples et gonflables, au moins une vessie par raidisseur concerné. La vessie, non gonflée, dans une forme aplatie, est introduite dans la filière de sorte à être placée dans une zone creuse devant être remplie par le noyau de polymérisation une fois le noyau gonflé.

Comme pour les bandes, les vessies, non gonflées, sont avantageusement préparés en bobines placées sur un râtelier du dispositif.

Afin d'assurer le déplacement de la pièce, le dispositif de traction est un dispositif à galets ou à chenilles ou à translation de la presse chauffante, ces différents moyens pouvant le cas échéant être utilisés en combinaison et exercer la traction sur la pièce réalisée en aval de la presse chauffante et ou sur la préforme.

Dans une forme de réalisation du dispositif, au moins un plateau de la presse chauffante comporte un élément déformable de manière élastique, tel qu'un bloc en élastomère ou une membrane gonflable ou encore une plaque montée sur des éléments ressort, dans une zone d'application de la pression **P** sur la préforme. Il est ainsi obtenu une mise en pression et une mise en forme satisfaisantes même lorsque la pièce comporte des épaisseurs locales de ses sous-ensembles variables suivant la longueur suivant la direction X.

Dans une application particulièrement avantageuse, le dispositif est constitué pour la réalisation de panneaux auto-raidis en matériau composite comportant une peau et au moins un raidisseur solidaire de la peau.

La description détaillée d'un mode de réalisation de l'invention est faite en référence aux figures qui illustrent de manière schématique :
figure 1a : un exemple de panneau raidi en matériau composite comportant des raidisseurs ouverts ;
figure 1b : un exemple de panneau raidi en matériau composite comportant des raidisseurs fermés ;
figure 2 : une illustration du procédé de l'invention sur une forme simplifiée comportant un raidisseur fermé ;
figure 3 : une vue depuis une extrémité de la presse chauffante refermée sur un panneau en matériau composite à raidisseur ouvert ;
figure 4 : une séquence, vues a, b, c, d, de l'ouverture d'un noyau de moulage introduit entre les préformes de la peau et des raidisseurs;
figure 5 : une séquence, vues a, b, c, d, de l'ouverture d'un noyau de moulage;
figure 6 : une illustration du procédé de l'invention sur un exemple de panneau plan comportant trois raidisseurs fermés et un renfort local ;
figure 7 : une section, perpendiculaire au sens du déplacement de la préforme dans la filière, au niveau de la presse et comportant une un plateau avec un élément déformable élastique ;
figure 8 : une illustration de l'assemblage par cocuisson de deux panneaux sur un moule (vues a et b) et le détail de la zone de jonction des panneaux (vues c et d).

Le procédé de l'invention met en oeuvre un principe d'extrusion de bandes comportant des plis de fibres préalablement imprégnés d'une résine non durcie, dits préimprégnés à l'état frais pour la réalisation en continue de panneaux raidis.

L'état frais est généralement l'état dans lequel les différents plis utilisés pour former une pièce en matériau composite, dans l'invention pour réaliser les bandes, sont déposés en couches successives. Les fibres de chaque pli sont imprégnées d'une résine polymérisable à un stade préliminaire.

Dans le cas présent les plis considérés comportent des fibres longues orientées suivant des directions définies, de préférence des plis dits unidirectionnels c'est-à-dire dont toutes les fibres d'un pli considéré ont la même orientation.

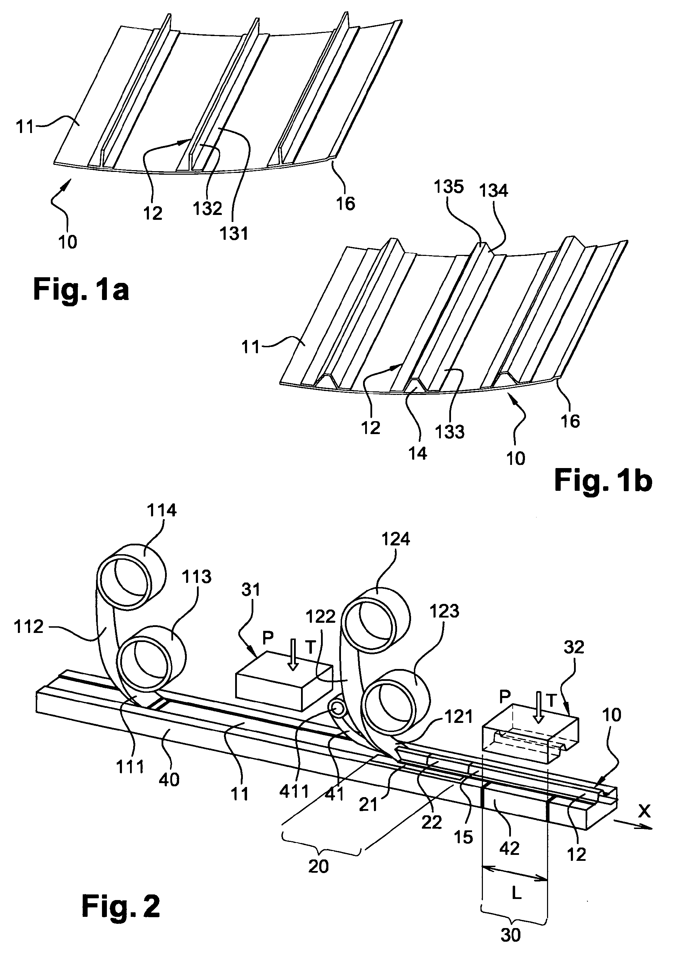

Les figures 1a et 1b illustrent deux exemples de panneaux raidis 10 comportant une peau 11 sur au moins une face de laquelle sont fixés des raidisseurs 12.

Dans le cas du panneau de la figure 1a, les raidisseurs 12 sont des raidisseurs en T, fixés sur la peau au niveau d'une semelle 131, correspondant à la barre horizontale du T, et comportant une âme 132, correspondant à la barre verticale du T, sensiblement perpendiculaire localement à la peau 11.

Dans le cas du panneau de la figure 1b, les raidisseurs 12 sont des raidisseurs en oméga Ω, fixés à la peau au niveau de deux semelles 133 qui sont reliées par deux âmes 134 et une tête 135. Le raidisseur en Ω est un exemple de raidisseur fermé sur les côtés et qui détermine avec la peau 11 un volume creux 14. Il existe également des raidisseurs qui détermine un volume creux ouvert, par exemple des raidisseurs à profil en C, qui comme il sera compris de la description suivante seront considérés avantageusement comme des raidisseurs fermés vis à vis du problème posé par ces raidisseurs dans la mise en oeuvre du procédé.

La peau et chaque raidisseur constituent autant de sous-ensembles du panneau raidi qui sont assemblés dans le panneau réalisé.

La figure 2 illustre sur une forme simplifiée de panneau 10 avec une peau relativement étroite, correspondant à une peau 11 du panneau, et un seul raidisseur 12 du panneau, le principe du procédé de réalisation d'une pièce en matériau composite suivant l'invention.

Le procédé comporte :
- une première étape de réalisation de bandes 111, 112, 121, 122 constituées chacune de plis élémentaires empilés ;
- une deuxième étape de traction par pas des bandes aux travers d'une filière 20 de conformation des dites bandes et de positionnement des sous-ensembles entre eux ;
- une troisième étape de compression et de chauffage des bandes, à la sortie de la filière 20, à chaque pas par une presse chauffante 30.

Lors de la première étape de réalisation des bandes 111, 112, 121, 122, chaque bande est réalisée par un empilage en couche de plis élémentaires, en général des plis de fibres unidirectionnelles imprégnés d'une résine organique thermodurcissable, non durcie, c'est-à-dire non polymérisée. Cet empilage est réalisé de manière conventionnelle comme pour la réalisation de pièces en matériaux composites.

Plus particulièrement une bande comporte au moins un pli comportant des fibres longues orientées suivant un sens longitudinal de la bande, c'est à dire le sens X du déplacement de la bande dans la filière 20, de telle sorte qu'une traction puisse être exercée sur la bande lors de la mise en oeuvre du procédé sans entraîner une déchirure de la bande.

Chaque bande est réalisée avantageusement avec une largeur correspondant à la largeur développée du sous-ensemble auquel elle est destinée. Ainsi, en général, les bandes destinées à former la peau ont une largeur supérieure aux bandes destinées à former les raidisseurs.

En outre les plis sont répartis entre les bandes de sorte que l'empilage des bandes lors de la mise en oeuvre du procédé conduit à obtenir le nombre de plis voulus pour chaque sous-ensemble de la pièce à réaliser, dans l'exemple de la figure 1, les plis de la peau 11 sont répartis entre les bandes 111 et 112, et les plis du raidisseur 12 sont répartis entre les bandes 121 et 122.

Dans l'exemple de la figure 1, les bandes 111, 112 de la peau 11 sont assemblées séparément des bandes 121, 122 du raidisseur 12, toutefois lesdites bandes de la peau et du raidisseur peuvent également être assemblées simultanément.

Dans une forme avantageuse de mise en oeuvre du procédé, les bandes sont réalisées séparément à la largeur voulue et sont conditionnées en rouleaux 113, 1,14, 123, 124 placés sur des râteliers pour délivrer les bandes au fur et à mesure de leurs passages dans la filière 20.

Le conditionnement en tels rouleaux est réalisé de la même manière que pour les plis sur les machines à draper connues de l'homme du métier, en utilisant dans le cas de matériaux pégueux un film séparateur, et dans le cas présent la longueur, et donc la taille des rouleaux, est adaptée pour répondre au besoin de réaliser les panneaux raidis en continu.

Le cas échéant des rouleaux préparés à l'avance sont stockés à basse température afin de ralentir la polymérisation de la résine de préimprégnation jusqu'à leur utilisation.

Lors de la deuxième étape, les bandes 111, 112, 121, 122 sont tirées sur une première partie 40 d'un moule au travers de la filière 20.

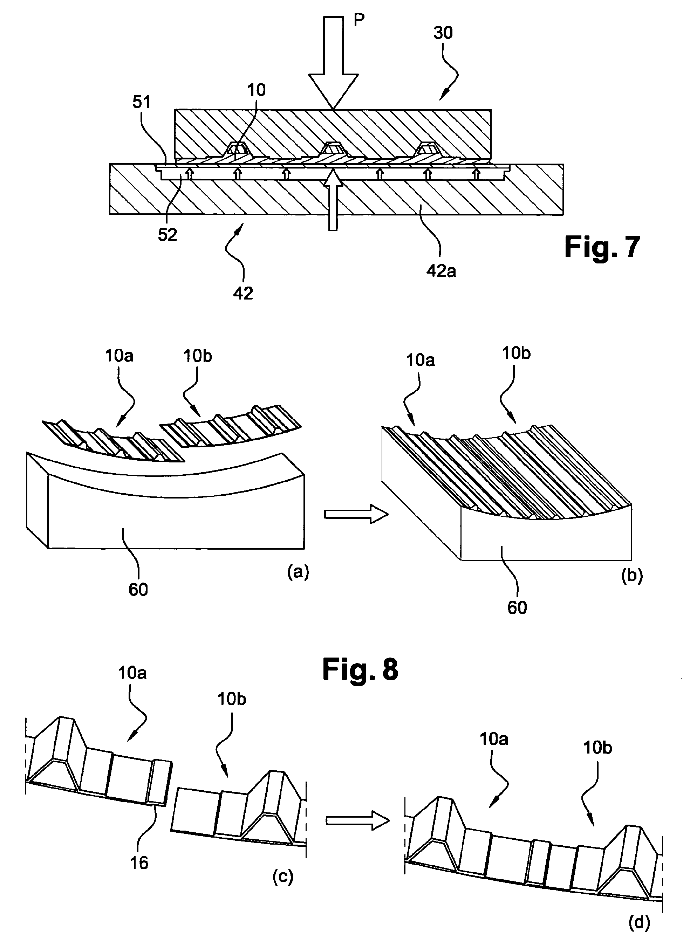

La filière 20 comporte elle même des filières secondaires 21, 22 dont les formes correspondent pour chacune à un profil d'un sous-ensemble, peau ou raidisseur, de la pièce à former, dans l'exemple illustré une première filière secondaire 21 dont le profil est celui de la peau 11 et une deuxième filière secondaire 22 dont le profil est celui du raidisseur 12. Les filières secondaires sont agencées entre elles pour que, à la sortie de la filière 20, le raidisseur 12 soit positionné sur la peau 11 à l'emplacement souhaité pour obtenir la pièce 10. Le profil intérieur des raidisseurs creux sur la peau est assuré par un système de conformation secondaire pouvant être par exemple une aiguille 23 ayant une section correspondant la section interne du raidisseur, comme illustré sur la figure 7 représentant une section transversale à la direction X de traction sur la préforme au niveau de la presse chauffante 30.

Les bandes 111, 112, 121, 122 sont tirées au travers de la filière 20 par un dispositif de traction, non représenté, par exemple un dispositif à galets ou à chenilles, situé du côté aval de la filière 20 et de la presse 30, côté aval opposé au côté par lequel les bandes sont introduites dans ladite filière, le déplacement étant ici réalisé par pas de longueur **dL**.

Cette traction qui entraîne les bandes dans la filière 20 est rendue possible sans que les plis ne se déforment, et en particulier sans modifier sensiblement l'orientation des fibres, ou ne se rompent en raison d'au moins un pli de chaque bande comportant des fibres orientées longitudinalement et qui est en mesure de transmettre les efforts dans le sens X de la traction.

A la sortie de la filière 20, les bandes 111, 112, 121, 122 assemblées constituent une préforme 15 de la pièce 10 qui est soumise, au niveau d'une presse 30, au cours de la troisième étape de durcissement, de préférence au plus près de la filière 20, à une pression **P** et à un chauffage à une température **T** sur une longueur de presse **L** suivant le sens du déplacement dans la filière 20.

La longueur de presse **L** est en pratique petite devant une longueur du panneau raidi à réaliser, par exemple inférieur à un mètre alors que le panneau produit n'a pas de longueur limite en théorie et peut en pratique dépasser dix mètres.

Ladite pression **P** et ledit chauffage à la température **T** sont appliqués pendant une durée **dt** d'immobilisation de la préforme 15 entre deux mouvements successifs de translation dans la filière, c'est-à-dire entre deux pas de longueur **dL, dL** étant inférieur à **L,** de sorte qu'un emplacement de la pièce aura, à la fin de cette deuxième étape, été soumis à la pression **P** et à la température **T** pendant la durée cumulée **T=dt x ( L / dL )** d'immobilisation des **L / dL** pas nécessaires pour qu'un point de la préforme parcourt la distance **L**.

Ce temps est donc défini par les paramètres choisis pour mettre en oeuvre le procédé et il est dicté par le cycle de polymérisation de la résine utilisée. Bien que pouvant varier dans des proportions importantes, la vitesse d'avance moyenne de la préforme dans la filière 20 est généralement de quelques centimètres par minute pour les résines thermodurcissables utilisées le plus fréquemment dans les industries de l'aéronautique.

La longueur **dL** est nécessairement inférieure à la longueur de presse **L** pour garantir que toute la longueur du panneau sera soumise à la pression **P** et à la température **T**. En pratique **dL** sera inférieure à 1/3 de la longueur de presse **L**, par exemple 1/10 de la longueur **L** ou moins pour permettre un durcissement progressif et homogène de la résine.

L'application de la pression **P** permet de calibrer et de stabiliser les préformes à la sortie de la filière et de compresser les différents plis des bandes entre eux pour obtenir la santé souhaitée du matériau composite après passage dans la presse 30.

L'application de la température **T** permet d'atteindre un niveau de polymérisation de la résine souhaité, qui peut être une polymérisation complète ou partielle, le nombre de pas **dL** pour couvrir la longueur de presse **L** et la durée pendant laquelle sont maintenues la pression **P** et la température **T** étant choisis pour obtenir un temps d'application de la température **T** correspondant aux conditions pour obtenir ce résultat.

Au cours de cette phase d'application de la température **T** et de la pression **P** les différentes bandes, la peau et les raidisseurs, soumis à une cocuisson, sont assemblés lors de la polymérisation, polymérisation qui est suivant le cas partielle ou totale comme déjà précisé.

Si nécessaire un four tunnel peut être disposé en aval de la presse 30 pour assurer une post-polymérisation du matériau afin de lui donner le maximum de ses propriétés mécaniques recherchées.

La pression **P** et la température **T** sont par exemple appliquées par le moyen d'une presse chauffante 30 formée par une seconde partie de moule 32 qui vient comprimer la préforme 15 entre la dite seconde partie de moule et la première partie de moule 40, plus particulièrement une zone de compression 42 de ladite première partie de moule située en vis à vis de ladite seconde partie de moule. Des moyens de chauffage régulent la température **T** de la presse chauffante 30, la zone de compression 42 étant avantageusement isolée thermiquement pour éviter une propagation de la chaleur apportée à la presse chauffante 30 dans le reste de la première partie de moule 40.

Dans l'exemple illustré sur la figure 2, la pression **P** est interrompue, ou au moins suffisamment diminuée pour ne pas s'opposer au déplacement de la préforme 15 et au passage des bandes dans la filière 20 lors de la traction réalisée sur celle-ci ou sur la partie formée du panneau raidi, ce qui est réalisé par exemple en ouvrant la presse chauffante 30, c'est-à-dire en écartant la seconde partie de moule 32 de la zone de compression 42, ces deux parties de la presse chauffante étant fixes suivant la direction X de la traction et du déplacement de la pièce 10.

Dans une autre forme de réalisation, non représentée, la presse chauffante 30 est montée sur un dispositif suiveur qui accompagne le déplacement de la préforme pendant sa traction, voire qui entraîne la préforme maintenue par la pression **P** exercée, sur la distance **dL** en maintenant la pression **P** et la température **T** puis, lorsque ladite distance **dL** a été parcourue, la pression est relâchée et le dispositif suiveur est ramené vers l'amont puis la pression **P** à nouveau appliquée pour un nouveau cycle suiveur. Avec un tel dispositif la longueur des pas **dL** peut être quelconque inférieure ou égale à la longueur **L**, voire correspondre à un entraînement quasi continu de la pièce.

Dans ces deux modes de réalisation, la pression **P** est relâchée lors des mouvements de translation relatifs entre la presse chauffante 30 et la préforme 15.

La pression **P** appliquée lors de la troisième étape, doit être appliquée de manière aussi homogène que possible sur toutes les surfaces des bandes mises en forme par la filière 20 y compris sur les surfaces correspondant aux raidisseurs, en particulier sur des parois latérales des âmes de raidisseurs.

Pour appliquer la pression **P** les moyens mis en oeuvre sont avantageusement optimisés suivant que le raidisseur est d'un profil ouvert permettant le démoulage du raidisseur lors de l'ouverture de la presse chauffante 30 ou suivant que le raidisseur est d'un profil fermé ne permettant pas ce type de démoulage.

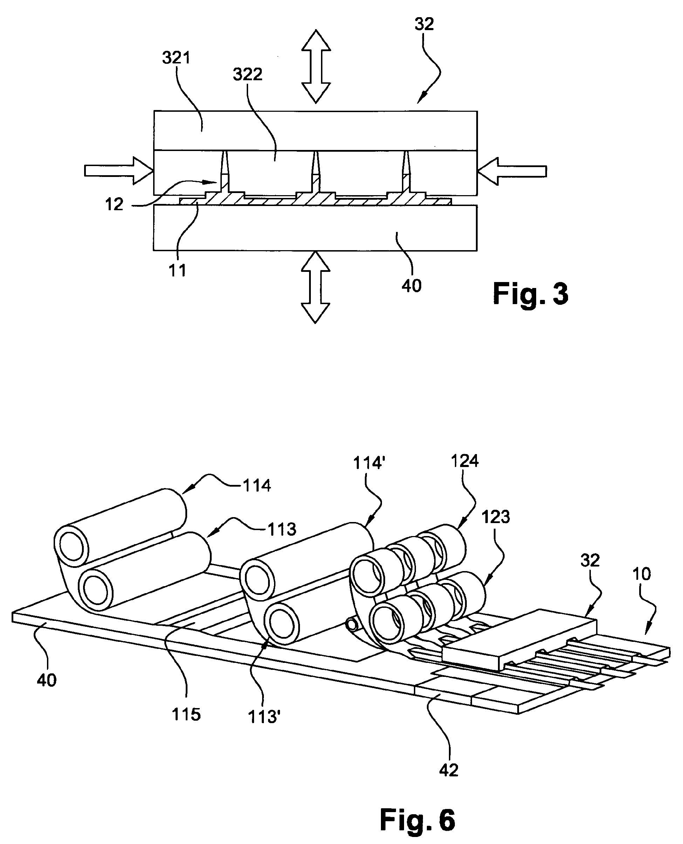

Dans le cas du panneau 10 de la figure 1 a avec des raidisseurs 12 en T, la seconde partie du moule 32 comporte des éléments presseurs latéraux 322, solidaires d'une base 321, comme illustré sur la figure 3.

Les éléments presseurs latéraux 322 sont de dimensions et d'agencements tels qu'ils sont placés entre deux âmes 132 de raidisseurs ou sur un côté de l'âme d'un raidisseur latéral du panneau et lesdits éléments presseurs latéraux sont solidaires de la base 321 de sorte à pouvoir être rapprochés sous l'effet de forces exercées latéralement sur les éléments presseurs latéraux les plus extérieurs.

Ainsi lorsque la pression **P** est exercée lors de la troisième étape du procédé par rapprochement de la deuxième partie de moule 32 et de la zone de compression 42, la force latérale est appliquée simultanément de sorte que les âmes 132 des raidisseurs sont également comprimées.

Dans le cas du panneau 10 de la figure 1b avec des raidisseurs 12 fermés, ici à section en Ω, il ne peut pas être mis en oeuvre uniquement des éléments presseurs latéraux du deuxième élément de moule 32 et il est alors nécessaire d'utiliser un noyau de polymérisation rigide, tel que par exemple une aiguille métallique, destiné à occuper le volume en creux 14 entre la peau 11 et un raidisseur 12, pour pouvoir appliquer une pression suffisante sur les âmes 134 et la tête 135 du raidisseur en Ω. Un tel noyau rigide s'étend donc suivant la direction X depuis la filière 20 jusque dans la presse chauffante 30.

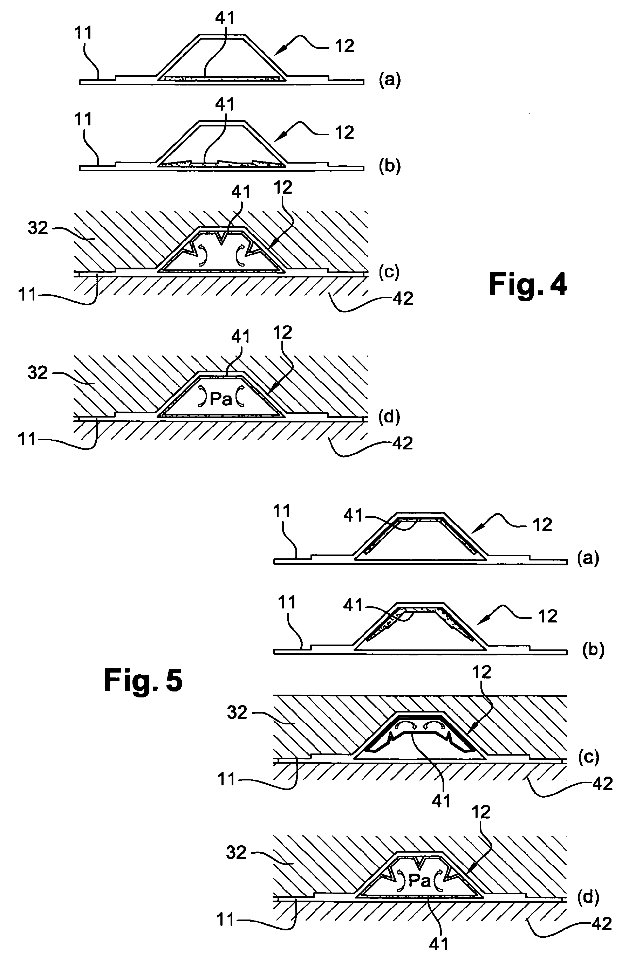

Dans un mode de réalisation d'un noyau de polymérisation destiné à occuper le volume creux 14, une vessie 41, gonflable et souple, par exemple une vessie en polyamide, en téflon® ou en silicone, est placée dans ledit volume creux et est soumise à une pression Pa de gonflage, par exemple la pression de l'autoclave ou une pression équivalente, de sorte que la vessie 41 appuie sur des faces intérieures du volume creux 14, voir figures 4d et figure 5d, tant sur la peau 11 que sur le raidisseur 12, ce qui a pour effet de comprimer les plis contre la zone de compression 42 et contre la deuxième partie de moule 32, avec les effets bénéfiques connus sur la santé de la matière.

Une possibilité offerte par l'utilisation d'un tel noyau de polymérisation gonflable lors de la troisième étape d'application de la pression **P** par la presse chauffante 30, est de réaliser des raidisseurs 12 dont l'épaisseur est variable.

Dans ces cas, la forme extérieure est imposée par la filière et la deuxième partie de moule 32 et le noyau de polymérisation gonflable s'adapte à la forme de la section du volume creux 14 résultant de la forme extérieure et des épaisseurs du raidisseur.

La mise en oeuvre de la vessie 41 peut également être combinée avec l'utilisation d'un noyau de polymérisation rigide tel qu'une aiguille métallique lorsque la polymérisation de la résine du panneau n'est que partielle à la sortie de la presse chauffante 30 (état mi-cuit).

Dans ce cas la vessie 41 n'est pas nécessairement gonflée pendant la réalisation du panneau raidi 10 suivant le procédé et est maintenue à l'intérieur du volume creux 14 pour être gonflé dans une étape ultérieure de polymérisation finale afin de stabiliser le raidisseur par exemple après une opération de cintrage du panneau et ou d'assemblage de panneaux au cours de laquelle étape le panneau est soumis à une pression d'autoclave qui pourrait, sans l'équilibrage des pressions obtenue par la vessie, déformer les raidisseurs avant que la résine n'est atteint un niveau de polymérisation suffisant pour obtenir la rigidité suffisante.

Ce mode de mise en oeuvre est également applicable à des raidisseurs comportant des volumes creux ouverts ne permettant un démoulage simple comme par exemple dans le cas des raidisseurs à profils en C.

Dans une application au procédé de l'invention, la vessie est formée par un tube introduit dans la filière 20 au même titre que les bandes 111, 112, 121, 122.

Pour disposer de grandes longueurs de vessie et assurer la production continue du panneau raidi, comme illustré sur la figure 1, la vessie 41 est délivrée sous la forme d'un ruban placé sur une bobine 411 dans lequel le tube est aplati.

La vessie 41 est par exemple introduite aplatie dans la filière 20 en étant placée sur les bandes formant la peau 11 et remplit le volume de la forme en creux suivant la séquence (a), (b), (c), (d) illustrée sur la figure 4 en étant gonflée après avoir passé la filière 20.

Il peut être remarqué que la vessie 41, non gonflée, est aplatie en réalisant un soufflet avec la paroi du tube formant ladite vessie de sorte que dans la forme aplatie la largeur du ruban formé par la vessie se trouve sur la peau avec une largeur inférieure ou au plus égale à la largeur intérieure du volume creux et ne se trouve ainsi pas prise entre les semelles 133 du raidisseur et la peau 11.

La vessie 41, aplatie, peut également être introduite dans la filière 20 en étant placée sous les bandes formant le raidisseur 12 et remplit le volume de la forme en creux suivant la séquence (a), (b), (c), (d) illustrée sur la figure 5 en étant gonflée après avoir passé la filière 20.

La pression **Pa** qui permet le gonflage de la vessie 41 est introduite par une extrémité libre de la vessie 41 située en aval, suivant le sens X de la traction sur le panneau, du panneau raidi 10 en cours de réalisation, par exemple par de l'air sous pression, le gonflage de la vessie étant limité vers le côté amont par la filière 20 qui maintient pincées les parois du tube formant la vessie 41.

Dans ce mode de réalisation, il est nécessaire que la pression exercée par la vessie 41 une fois gonflée ne provoque pas une séparation du raidisseur 12 d'avec la peau 11 ou une déformation inacceptable de l'un ou de l'autre.

Pour éviter le risque d'une telle séparation ou déformation, d'une part la pression **Pa** dans la vessie 41 n'est introduite et maintenue que lorsque la pression **P** de la presse chauffante est appliquée, la pression **Pa** étant donc créée dans la vessie 41 au rythme et suivant le cycle de l'application de la pression **P** par la presse chauffante 30, et d'autre part le niveau de polymérisation atteint lorsque la pièce 10 sort la presse chauffante 30 est suffisant pour garantir l'adhérence du raidisseur 12 sur la peau 11 et pour obtenir une rigidité suffisante des parois délimitant le volume creux 14.

Lorsque le panneau en cours de réalisation est terminé, la pression dans la vessie 41 est annulée et le noyau de polymérisation dégonflé peut le cas échéant être extrait par traction depuis l'une des extrémités du panneau 10.

Dans une autre forme de réalisation, non illustrée, le volume creux 14 est occupé par un noyau rigide, comme par exemple une aiguille 23, fixé au niveau de la filière 20 et qui s'étend sensiblement jusqu'à la partie la plus aval, suivant le sens X de la traction sur le panneau, de la presse chauffante 30, de sorte que la pression **P** exercée par ladite presse chauffante génèrent également une pression sur les parois délimitant le volume creux 14 et maintenues par le noyau rigide.

Le procédé qui vient d'être décrit dans le cas particulier d'un panneau raidi plan peut sans difficulté être généralisé à tout élément de structure en matériau composite.

La figure 6 illustre un exemple de panneau plan en cours de réalisation et comportant trois raidisseurs en Ω.

Sur cette illustration, les parties de la filière 20 ne sont pas représentées.

Dans le dispositif illustré sur la figure 6, la peau est réalisée en utilisant quatre bandes débitées à partir de rouleaux 113, 114, 113', 114' et chaque raidisseur est réalisé à partir de deux bandes 123, 124.

Dans ce cas, le râtelier est adapté pour recevoir tous les rouleaux mis en oeuvre.

Un panneau peut également présenter des variations d'épaisseurs locales, notamment de la peau.

Les variations d'épaisseur dans les matériaux composites consistent généralement en une modification locale du nombre des plis formant une paroi de la pièce.

Lorsqu'une telle variation de l'épaisseur est constante sur toute la longueur de la peau, cas non illustré, les plis correspondants sont placés sur une ou des bandes supplémentaires de largeurs inférieures à la largeur de la peau et la forme de la première filière secondaire 21 est adaptée pour prendre en compte la différence d'épaisseur.

Lorsqu'une telle variation de l'épaisseur est localisée sur une partie de la longueur du panneau, des bandes 115, comme illustré sur la figure 6, comportant le nombre de plis voulus sont déposées soit directement sur ou entre les plis lors de la préparation des bandes soit à la demande lorsque les bandes sont utilisées, par exemple manuellement ou au moyen d'une machine à draper 31 venant appliquer les plis voulus avant le passage dans la filière 20.

Lorsque la préforme comporte de telles surépaisseurs locales au niveau d'un raidisseur, et que la pièce est polymérisée à un état final à la sortie de la pièce, lesdites surépaisseurs locales sont renvoyées vers l'intérieur du volume creux 14 du panneau 10, entre la peau 11 et le raidisseur 12, sous l'effet de la presse 30. Les capacités de déformation de la vessie 41 gonflée permettent alors d'absorber les surépaisseurs locales. Il résulte de ce processus de mise en forme par la presse que les faces externes, et en particulier la face extérieure du panneau réalisé est exempte de déformations locales.

Lorsque la pièce est polymérisée à un état mi-cuit à la sortie de la presse en vue d'un formage et ou d'un assemblage lors d'une polymérisation finale en autoclave, les surépaisseurs sont avantageusement repoussées lors de la mise en forme dans l'autoclave pour obtenir une face extérieure conforme à la surface du moule utilisé.

Afin de garantir l'application d'une pression **P** correcte sur la préforme 15, condition d'une bonne compression et d'un bon conformage de la pièce, la presse chauffante 30 est avantageusement réalisé pour accepter les différences d'épaisseurs du matériau comprimé, par exemple en réalisant au moins une des parties de moule avec un élément déformable 52 de manière élastique présentant une souplesse adaptée tel qu'un matériau en élastomère ou une membrane souple gonflable comme illustré sur la figure 7.

Dans l'exemple illustré sur la figure 7 la zone de compression 42 comporte entre un socle 42a de ladite zone de compression et la pièce 10, ici à l'état de préforme, l'élément déformable 52 venant en appui d'une part sur le socle 42a et d'autre part sur une plaque intermédiaire 51 semi rigide interposée entre la pièce 10 et l'élément déformable 52.

Lorsque la pression P est appliquée sur la presse chauffante 30, l'élément déformable 52 se déforme sous la réaction du socle 42a et des variations d'épaisseur du matériau en raison de surépaisseurs locales de la pièce comprimée, variations d'épaisseur qui sont transmises par la plaque intermédiaire 51.

La plaque intermédiaire 51 semi rigide assure d'une part une meilleure répartition des efforts introduits par les différences d'épaisseur dans le matériau de la pièce, facilite le glissement de la pièce 10 dans la presse chauffante 30 lorsque la pièce est déplacée suivant la direction X de la traction, protège le matériau de l'élément déformable qui est par exemple un silicone et permet d'obtenir un meilleur état de surface de la pièce 10 sur sa face tournée vers le socle 42a.

Bien que la peau 11 du panneau soit représentée plane sur les exemples illustrant le procédé, un soyage 16 est avantageusement réalisée sur un bord du panneau, comme dans le cas des panneaux illustrés sur les figures 1 a et 1 b, par une conformation adaptée de la filière 20 et de la presse chauffante 30. Un tel soyage est par exemple prévu pour réaliser un assemblage de panneau sans désaffleurement sur une des faces des panneaux assemblés.

Le panneau obtenu peu également présenter une courbure simple donnée par une forme correspondante de la filière et de la presse chauffante , voire être cintré dans sa longueur par une forme adaptée de la presse chauffante et des moyens de traction.

Dans une forme de mise en oeuvre du procédé, la résine de la préforme n'est que partiellement polymérisée lors de la troisième étape du procédé de sorte à pouvoir reprendre un état plastique lors d'une nouvelle élévation de la température.

Dans ce cas le panneau dans un état précuit peut être formée à nouveau dans un moule, par exemple pour acquérir une double courbure, subir des estampages ou d'autres traitements localisés, être assemblé par cocuisson avec d'autres panneaux ou sous-ensembles constitués de matériaux à l'état frais ou partiellement polymérisé au cours d'une étape supplémentaire pendant laquelle le panneau est élevé en température, formé lorsque la résine à atteint un état plastique, puis maintenu en température jusqu'à polymérisation complète de la résine par exemple dans un autoclave.

Un exemple d'application s'adresse à la réalisation de fuselages d'aéronef dans lequel des panneaux raidis de fuselage sont réalisés suivant le procédé jusqu'à un état précuit puis sont assemblés au cours de l'étape de polymérisation finale avec par exemple des encadrement de portes ou de hublots ou des cadres de fuselage qui peuvent réalisés en matériaux métalliques ou en matériaux composites non cuits ou partiellement ou totalement cuits.

Le cas particulier de l'assemblage de deux panneaux 10a, 10b est illustré sur la figure 8. Les deux panneaux sont ainsi positionnés, vue a et détail c de la figure 8, sur une matrice 60 d'un moule à la forme voulue de l'ensemble, le cas échéant avec une double courbure, puis l'ensemble de la matrice 60 et des pièces 10a, 10b, vue b et détail d de la figure 8, est passé dans un autoclave, non représenté, pour la polymérisation avec cocuisson des deux panneaux.

Le procédé et le dispositif permettent donc de réaliser en continu des panneaux raidis, et de manière générale tout type de pièce en matériau composite pouvant être assimilé à un panneau raidi, avec des moyens, en particulier une presse chauffante, de dimension réduite indépendamment de la longueur des pièces à réaliser.

Suivant l'état choisi de polymérisation du matériau, dans une étape suivante, ces panneaux peuvent être formés et assemblés à d'autres panneaux ou sous-ensemble lors d'une polymérisation finale, par exemple pour la réalisation de fuselages d'aéronef.

## Revendications

1. Procédé de réalisation d'une pièce (10) en matériau composite, ladite pièce comportant une peau (11) et au moins un raidisseur (12) assemblés à ladite peau, ladite peau étant formée à partir d'au moins une première bande et ledit au moins un raidisseur étant formé à partir d'au moins une seconde bande, chaque première et seconde bande étant formée d'au moins un pli de fibres imprégnées d'une résine non polymérisée, ledit procédé comportant les étapes de ;
- réalisation d'une préforme (15) de la pièce (1 0) par une traction suivant une direction longitudinale **X** de l'au moins une première bande et de l'au moins une seconde bande au travers d'une filière (20) de conformation et de positionnement de la peau et du au moins un raidisseur, au moins une première et au moins une seconde bandes étant mises en contact, et un noyau de polymérisation étant introduit entre une première bande et une seconde bande en contact, avant leurs passage au travers de la filière (20), et;
- pressage de la préforme (15) obtenue dans une presse chauffante (30) pendant une durée **dt** de sorte à former la peau (11) et le au moins un raidisseur (12) assemblé à la peau, une pression **P** et une température **T** de polymérisation de la résine des première et seconde bandes étant appliquées à ladite préforme dans ladite presse chauffante sur une longueur de presse **L**, la longueur de presse **L** étant considérée dans le sens de la direction longitudinale **X** de la préforme et étant inférieure à une longueur du panneau.

2. Procédé de réalisation d'une pièce (10) en matériau composite selon la revendication 1, **caractérisé en ce que** ledit noyau de polymérisation est gonflable.

3. Procédé de réalisation d'une pièce (10) en matériau composite selon la revendication 2, **caractérisé en ce qu'**une partie dudit noyau située dans la presse est gonflé avec une pression **Pa** supérieure à la pression atmosphérique lorsque la pression **P** est appliquée sur la préforme.

4. Procédé selon l'une quelconque des revendications précédentes, caractérisé en ce ladite au moins une première bande et/ou ladite au moins une seconde bande (111, 112, 121, 122) comporte au moins un pli comportant des fibres longues orientées suivant la direction longitudinale **X.**

5. Procédé selon l'une des revendications précédentes, **caractérisé en ce qu'**il comporte une étape, préalable à la réalisation de la préforme, de dépôt en amont de la filière (20) d'un ou plusieurs plis de renfort (115) localement sur au moins une de la au moins une première ou de la au moins une seconde bande (111, 112, 121, 122).

6. Dispositif pour la réalisation de pièces (10) en matériau composite pour la mise en oeuvre du procédé selon l'une quelconque des revendications précédentes, comportant :
- une filière (20) de mise en forme et de positionnement des au moins une première et au moins une seconde bandes (111, 112, 121, 122) ;
- une presse chauffante (30) d'application d'une pression **P** et de génération d'une température **T,**
- la presse chauffante (30) étant placée en aval de la filière (20) selon une direction X de déplacement des pièces à réaliser ;
- un dispositif de traction est configuré pour déplacer les au moins une première et au moins une seconde bandes (111, 112, 121, 122) dans la filière (20) suivant un sens amont vers aval selon une direction X de déplacement des pièces à réaliser ;
ledit dispositif étant **caractérisé en ce que**,
- un dispositif de distribution d'au moins un noyau de polymérisation est configuré pour distribuer ledit au moins un noyau de polymérisation entre une première et une seconde bande en amont de la filière (20).

7. Dispositif selon la revendication précédente pour la mise en oeuvre du procédé selon la revendication 3, **caractérisé en ce que** le dispositif de distribution d'au moins un noyau de polymérisation est configuré pour distribuer au moins un noyau de polymérisation gonflable; et **en ce que** le dispositif pour la réalisation de pièces (10) en matériau composite comprend :
- un système de gonflage dudit au moins un noyau de polymérisation gonflable, ledit système de gonflage étant asservi à la presse chauffante (30) et configuré pour gonfler ledit noyau de polymérisation lorsque la pression **P** est exercée sur la préforme.

8. Dispositif selon la revendication 6 ou 7, **caractérisé en ce que** la filière (20) comporte une première filière secondaire (21, 22) pour la peau et une seconde filière secondaire pour chacun des au moins un raidisseur.

9. Dispositif selon l'une quelconque des revendications 7 à 8, **caractérisé en ce que** le dispositif de traction est un dispositif à galets et ou à chenilles et/ou à translation de la presse chauffante (30).

10. Dispositif selon l'une quelconque des revendications 7 à 9, **caractérisé en ce qu'**un plateau de la presse chauffante (30) comporte un élément déformable (52) de manière élastique, tel qu'un bloc en élastomère ou une membrane gonflable, dans une zone d'application de la pression P sur la préforme (15).

## Patentansprüche

1. Verfahren zur Herstellung eines Werkstücks (10) aus Verbundmaterial, wobei das Werkstück eine Haut (11) und mindestens ein Verstärkungselement (12) aufweist, das mit der Haut zusammengefügt ist, wobei die Haut aus mindestens einem ersten Streifen ausgebildet ist und das mindestens eine Verstärkungselement aus mindestens einem zweiten Streifen ausgebildet ist, wobei jeder erste und zweite Streifen aus mindestens einer Faserschicht ausgebildet ist, die mit einem nicht ausgehärteten Harz imprägniert ist, wobei das Verfahren die folgenden Schritte aufweist:
- Herstellen einer Vorform (15) des Werkstücks (10) durch ein Ziehen des mindestens einen ersten Streifens und des mindestens einen zweiten Streifens in einer Längsrichtung X durch eine Düse (20) zur Formgebung und zur Positionierung der Haut und des mindestens einen Versteifungselements, wobei mindestens ein erster und mindestens ein zweiter Streifen in Kontakt gebracht werden, und ein Polymerisationskern zwischen einem ersten Streifen und einem zweiten Streifen, die in Kontakt sind, vor deren Durchgang durch die Düse (20) eingeführt wird, und;
- Pressen der erhaltenen Vorform (15) in einer Heißpresse (30) für eine Dauer dt, um die Haut (11) und das mindestens eine Verstärkungselement (12), das mit der Haut zusammengefügt ist, auszubilden, wobei ein Druck P und eine Polymerisationstemperatur T des Harzes des ersten und des zweiten Streifens auf die Vorform in der Heißpresse auf einer Presslänge L angewendet werden, wobei die Presslänge L in der Längsrichtung X der Vorform verläuft und kleiner ist als eine Länge der Platte.

2. Verfahren zur Herstellung eines Werkstücks (10) aus Verbundmaterial nach Anspruch 1, **dadurch gekennzeichnet, dass** der Polymerisationskern aufblasbar ist.

3. Verfahren zur Herstellung eines Werkstücks (10) aus Verbundmaterial nach Anspruch 2, **dadurch gekennzeichnet, dass** nur ein Teil des Kerns, der in der Presse angeordnet ist, mit einem Druck Pa größer als der Atmosphärendruck aufgeblasen wird, während der Druck P auf die Vorform angewendet wird.

4. Verfahren nach einem der vorhergehenden Ansprüche, **dadurch gekennzeichnet, dass** der mindestens eine erste Streifen und/oder der mindestens eine zweite Streifen (111, 112, 121, 122) mindestens eine Schicht aufweist, die lange Fasern aufweist, die in der Längsrichtung X ausgerichtet sind.

5. Verfahren nach einem der vorhergehenden Ansprüche, **dadurch gekennzeichnet, dass** es vor der Herstellung der Vorform einen Schritt zur lokalen Aufbringung, stromaufwärts der Düse (20), von einer oder mehreren Verstärkungsschichten (115) auf mindestens einem des mindestens einen ersten oder des mindestens einen zweiten Streifens (111, 112, 121, 122) aufweist.

6. Vorrichtung zur Herstellung von Werkstücken (10) aus Verbundmaterial zur Durchführung des Verfahrens nach einem der vorhergehenden Ansprüche, die Folgendes aufweist:
- eine Düse (20) zur Formung und Positionierung des mindestens einen ersten und des mindestens zweiten Streifens (111, 112, 121, 122);
- eine Heißpresse (30) zur Anwendung eines Drucks P und zur Erzeugung einer Temperatur T,
- wobei die Heißpresse (30) stromabwärts der Düse (20) in einer Transportrichtung X der herzustellenden Werkstücke angeordnet ist ;
- eine Ziehvorrichtung konzipiert ist, um den mindestens einen ersten und den mindestens einen zweiten Streifen (111, 112, 121, 122) in der Düse (20) in einer von stromaufwärts nach stromabwärts verlaufenden Richtung gemäß einer Transportrichtung X der herzustellenden Werkstücke zu transportieren;
wobei die Vorrichtung **dadurch gekennzeichnet ist, dass**:
- eine Vorrichtung zur Verteilung mindestens eines Polymerisationskerns konzipiert ist, um den mindestens einen Polymerisationskern zwischen einem ersten und einem zweiten Streifen stromaufwärts der Düse (20) zu verteilen.

7. Vorrichtung nach dem vorhergehenden Anspruch zur Durchführung des Verfahrens nach Anspruch 3, **dadurch gekennzeichnet, dass** die Vorrichtung zur Verteilung mindestens eines Polymerisationskerns konzipiert ist, um mindestens einen aufblasbaren Polymerisationskern zu verteilen; und dadurch, dass die Vorrichtung zur Herstellung von Werkstücken (10) aus Verbundmaterial Folgendes aufweist:
- ein System zum Aufblasen des mindestens einen aufblasbaren Polymerisationskerns, wobei das System zum Aufblasen von der Heißpresse (30) gesteuert wird und konzipiert ist, um den Polymerisationskern aufzublasen, wenn der Druck P auf die Vorform angewendet wird.

8. Vorrichtung nach Anspruch 6 oder 7, **dadurch gekennzeichnet, dass** die Düse (20) eine erste Sekundärdüse (21, 22) für die Haut und eine zweite Sekundärdüse für jedes des mindestens einen Verstärkungselements aufweist.

9. Vorrichtung nach einem der vorhergehenden Ansprüche 7 bis 8, **dadurch gekennzeichnet, dass** die Vorrichtung zum Ziehen eine Vorrichtung mit Rollen und/oder mit Raupen und/oder eine Verschiebevorrichtung der Heißpresse (30) ist.

10. Vorrichtung nach einem der Ansprüche 7 bis 9, **dadurch gekennzeichnet, dass** eine Platte der Heißpresse (30) ein elastisch verformbares Element (52), wie beispielsweise einen Elastomerblock oder eine aufblasbare Membran, in einer Zone zur Anwendung des Drucks P auf die Vorform (15) aufweist.

## Claims

1. Method for producing a part (10) made of composite material, said part comprising a skin (11) and at least one stiffener (12) joined to said skin, said skin being formed from at least one first strip and said at least one stiffener being formed from at least one second strip, each first and second strip being formed by at least one ply of fibers impregnated with a non-polymerized resin, said method comprising the steps of;
- producing a preform (15) of the part (10) by pulling the at least one first strip and the at least one second strip in a longitudinal direction **X** through a die (20) for shaping and positioning the skin and the at least one stiffener, at least one first and at least one second strips being placed in contact, and a polymerization core being introduced between a first strip and a second strip in contact before their passage through the die (20), and;
- pressing of the preform (15) obtained in a heating press (30) for a duration **dt** so as to form the skin (11) and the at least one stiffener (12) joined to the skin, a pressure **P** and a temperature **T** for polymerizing the resin of the first and second strips being applied to said preform in said heating press over a press length **L**, the press length **L** being considered in the longitudinal direction **X** of the preform and being shorter than a length of the panel.

2. Method for producing a part (10) made of composite material according to Claim 1, **characterized in that** said polymerization core is inflatable.

3. Method for producing a part (10) made of composite material according to Claim 2, **characterized in that** a part of said core situated in the press is inflated with a pressure **Pa** greater than atmospheric pressure when the pressure **P** is applied to the preform.

4. Method according to any one of the preceding claims, **characterized in that** said at least one first strip and/or said at least one second strip (111, 112, 121, 122) comprises at least one ply comprising long fibers oriented in the longitudinal direction **X**.

5. Method according to one of the preceding claims, **characterized in that** it comprises a step, prior to the production of the preform, of deposition, upstream of the die (20), of one or more reinforcing plies (115) locally on at least one of the at least one first or of the at least one second strip (111, 112, 121, 122).

6. Device for producing parts (10) made of composite material for implementing the method according to any one of the preceding claims, comprising:
- a die (20) for shaping and positioning the at least one first and at least one second strips (111, 112, 121, 122);
- a heating press (30) for applying a pressure **P** and for generating a temperature **T**,
- the heating press (30) being placed downstream of the die (20) in a direction X of travel of the parts to be produced;
- a pulling device is configured to move the at least one first and at least one second strips (111, 112, 121, 122) in the die (20) from upstream to downstream in a direction X of travel of the parts to be produced;
said device being **characterized in that**,
- a device for dispensing at least one polymerization core is configured to dispense said at least one polymerization core between a first and a second strip upstream of the die (20).

7. Device according to the preceding claim for implementing the method according to Claim 3, **characterized in that** the device for dispensing at least one polymerization core is configured to dispense at least one inflatable polymerization core; and **in that** the device for producing parts (10) made of composite material comprises:
- a system for inflating said at least one inflatable polymerization core, said inflation system being slaved to the heating press (30) and configured to inflate said polymerization core when the pressure **P** is exerted on the preform.

8. Device according to Claim 6 or 7, **characterized in that** the die (20) comprises a first secondary die (21, 22) for the skin and a second secondary die for each of the at least one stiffener.

9. Device according to either one of Claims 7 and 8, **characterized in that** the pulling device is a device with rollers and/or with tracks and/or with translation of the heating press (30).

10. Device according to any one of Claims 7 to 9, **characterized in that** a plate of the heating press (30) comprises an elastically deformable element (52), such as a block of elastomer or an inflatable membrane, in an area of application of the pressure **P** to the preform (15).
